# FASCICULE DE BREVET EUROPEEN

(11) **EP 0 867 668 B1**
(45) Date de publication et mention de la délivrance du brevet: **28.01.2004**
(21) Numéro de dépôt: 98400727.8
(22) Date de dépôt: 27.03.1998
(51) Int. Cl.: F24H 8/00

(54) **Appareil de chauffage au gaz d'eau par contact direct**
Gasbeheizter Wasserkessel mit direkter Berührung des Wassers
Gas-fired direct contact water heater

(30) Priorité: 27.03.1997 CA 2201259
(43) Date de publication de la demande: 30.09.1998
(73) Titulaire: Societe en Commandite Gaz Metropolitain, Montreal, Quebec H2K 2X3 (CA); GAZ DE FRANCE, 75017 Paris (FR); SOFAME, Montréal, Québec H1W 3Y8 (CA); CHAUDIERES SECCACIER, 75015 Paris (FR); The Brooklyn Union Gas Company, Brooklyn, New York 11201-3850 (US)
(72) Inventeur: Guillet, Rémi Pierre, 93380 Pierrefitte (FR); Mandeville, Luc, Terrebonne - Quebec J6X 2T7 (CA); Bocherel, Pascal, Larchmont, New York 10538 (US); Brunet, Stéphane, Quebec H4L 3V4 (CA); Vabre, Georges Pierre, 78290 Croissy (FR); Billy, Daniel, 75013 Paris (FR)
(74) Mandataire: Thévenet, Jean-Bruno

(56) Documents cités:
- WO-A-98/12485
- FR-A- 2 557 684
- FR-A- 2 605 720
- FR-A- 2 703 136
- GB-A- 2 112 517
- US-A- 4 765 280
- PATENT ABSTRACTS OF JAPAN vol. 011, no. 086 (M-572), 17 mars 1987 (1987-03-17) -& JP 61 240009 A (KENICHI NAKAGAWA), 25 octobre 1986 (1986-10-25)

## Description

La présente invention concerne un appareil de chauffage d'eau par contact direct selon le préambule de la revendication 1 ayant un rendement élevé et des émissions d'oxydes NOₓ extrêmement faibles, dans lequel les gaz brûlés quittant le boîtier de l'appareil de chauffage subissent un refroidissement supplémentaire dans un garnissage secondaire destiné à extraire une quantité supplémentaire de chaleur sensible et latente, et dans lequel l'air de combustion est préchauffé et humidifié dans un troisième garnissage avant mélange avec du gaz naturel, si bien que les émissions d'oxydes NOₓ sont notablement réduites et le rendement thermique est accru afin que le pouvoir calorifique global du combustible soit accru.

On connaît déjà par le document FR 2 557 684 A une chaudière de chauffage ou de fourniture d'eau chaude sanitaire mettant en oeuvre un humidificateur de gaz comburant et un laveur de fumées, ainsi qu'une enceinte d'arrosage principale traversée par les gaz de combustion, avec en partie haute de l'enceinte des moyens de pulvérisation d'eau et en partie basse de l'enceinte un bac de récupération de l'eau pulvérisée et un brûleur.

Le document US 4 765 280 décrit par ailleurs une enceinte d'un appareil de chauffage d'eau équipée d'un garnissage de matériau endothermique.

On connaît encore par le document JP 61 240 009 A un système de chaudière dans lequel on humidifie et on réchauffe l'air comburant dans une première colonne de chauffage et d'humidification tandis que les gaz de combustion sont refroidis et déshumidifiés dans une colonne de refroidissement et de déshumidification, de manière à accroître le rendement thermique tout en réduisant les émissions d'oxydes NOₓ.

On se réfère au brevet français n° 81.12 770 demandé le 29 juin 1981 et relatif à un système de traitement des gaz brûlés des brûleurs à gaz, et au brevet français n° 88.11 651 demandé le 6 septembre 1988 et concernant le principe mis en oeuvre dans des appareils de chauffage par contact direct. On considère qu'il s'agit de la technique antérieure la plus proche et elle concerne un ensemble comprenant une seconde section et une troisième section à garnissage placées dans un système qui travaille à la manière d'une pompe à vapeur d'eau pour le traitement des gaz brûlés d'échappement à la sortie d'une chaudière, en assurant un traitement supplémentaire de l'air de combustion à l'entrée de la chaudière. Le système décrit concerne l'échange de chaleur et de condensat utilisé pour l'humidification-séchage et pour le chauffage-refroidissement de gaz par un système d'échange.

Il est nécessaire de réduire encore de façon importante les émissions d'oxydes NOₓ des appareils de chauffage au gaz d'eau par perfectionnement de leur réalisation.

Il est aussi nécessaire d'accroître le rendement thermique par élévation du point de rosée des produits de combustion.

Une caractéristique de la présente invention est la réalisation d'un appareil de chauffage au gaz d'eau par contact direct présentant une réduction importante des émissions des oxydes NOₓ et dans lequel un garnissage secondaire est placé en aval de la cheminée d'échappement du boîtier du brûleur principal afin qu'il réduise encore plus la température des gaz d'échappement et permette l'utilisation, en circuit fermé, d'eau chaude produite par le garnissage secondaire afin que l'air ambiant, destiné à être utilisé sous forme mélangée au gaz naturel pour l'alimentation du brûleur, soit préchauffé et humidifié.

De façon plus particulière, l'invention a pour objet un appareil de chauffage au gaz pour le chauffage d'eau par contact direct, comprenant un premier boîtier ayant une paroi latérale circonférentielle, une paroi fermée d'extrémité inférieure et une cheminée raccordée à la partie d'extrémité supérieure du premier boîtier, un dispositif de déchargement d'eau placé dans le boîtier, un brûleur disposé du côté du premier boîtier, une conduite d'alimentation en gaz combustible raccordée au brûleur et destinée à transmettre un gaz combustible au brûleur, un conduit d'alimentation en air de combustion raccordé au brûleur, un dispositif collecteur d'eau placé sous le brûleur et destiné à collecter l'eau chaude, un dispositif à boîtier supplémentaire, muni d'un dispositif supplémentaire de déchargement d'eau et d'un dispositif collecteur d'eau supplémentaire, un premier dispositif à conduit destiné à transmettre l'eau chaude du dispositif collecteur d'eau placé dans le premier boîtier, et un dispositif à conduit supplémentaire destiné à transmettre l'eau du dispositif à boîtier supplémentaire, caractérisé en ce que le premier boîtier comprend un premier dispositif à garnissage possédant des éléments d'échange de chaleur et disposé entre le dispositif de déchargement d'eau et le brûleur, en ce que le dispositif à boîtier supplémentaire comprend un dispositif supplémentaire à garnissage ayant des éléments d'échange de chaleur et disposé à une certaine distance au-dessous du dispositif supplémentaire de déchargement d'eau pour la formation d'une source d'air humide destiné à être mélangé au gaz combustible afin que le point de rosée des produits de combustion soit accru et que les émissions d'oxydes Noₓ soient réduites après combustion, le dispositif supplémentaire à garnissage étant lui-même placé dans le boîtier supplémentaire au-dessus du dispositif collecteur d'eau supplémentaire destiné à collecter l'eau qui a traversé le dispositif à garnissage supplémentaire par percolation.

Une autre propriété de la présente invention est la mise à disposition d'un troisième garnissage dans une colonne d'alimentaire en air du brûleur et la pulvérisation, sur le troisième garnissage, d'eau chauffée collectée à partir du garnissage secondaire afin que l'air ambiant soit préchauffé et humidifié et donne ainsi une réduction notable des émissions d'oxydes NO_{X} dans la plage comprise entre environ 5 et 10 ppm avec 3 % de O₂ et avec augmentation importante du point de rosée des produits de combustion.

Grâce aux caractéristiques précitées, considérées dans leur aspect général, l'invention assure la mise à disposition d'un appareil de chauffage au gaz d'eau par contact direct comprenant un premier boîtier ayant une paroi latérale circonférentielle, une paroi inférieure fermée d'extrémité, et une cheminée raccordée à sa partie supérieure. Un dispositif de déchargement d'eau est placé dans le boîtier et est associé à un premier dispositif à garnissage ayant des éléments d'échange de chaleur. Un brûleur est placé du côté du premier boîtier qui se trouve sous le premier dispositif à garnissage. Une conduite d'alimentation en gaz combustible est raccordée au brûleur pour la transmission d'un gaz combustible au brûleur. Un conduit d'alimentation en air de combustion est raccordé au brûleur, et un dispositif collecteur d'eau est placé sous le brûleur afin qu'il collecte l'eau chaude. Un dispositif supplémentaire à garnissage est incorporé et possède des éléments d'échange de chaleur placés dans un boîtier supplémentaire. Un autre dispositif de déchargement d'eau est placé au-dessus du dispositif supplémentaire à garnissage afin qu'il forme une source d'air humide destiné à être mélangé au gaz combustible afin que le point de rosée des produits de combustion soit plus élevé et que les émissions d'oxydes NOₓ après combustion soient réduites. En outre, un dispositif collecteur d'eau est placé dans le boîtier supplémentaire au-dessous du dispositif à garnissage supplémentaire afin qu'il permette la collecte de l'eau qui a traversé le dispositif à garnissage supplémentaire par percolation. Un premier dispositif à conduit est destiné à provoquer une circulation de l'eau chaude depuis le dispositif collecteur d'eau placé dans le premier boîtier. Un dispositif à conduit supplémentaire est destiné à faire circuler l'eau à partir du dispositif à boîtier supplémentaire.

D'autres caractéristiques et avantages de l'invention seront mieux compris à la lecture de la description qui suit de modes de réalisation, faite en référence aux dessins annexés sur lesquels :
la figure 1 est un schéma simplifié d'un appareil de chauffage d'eau par contact direct, à rendement élevé et ayant des émissions extrêmement faibles d'oxydes NOₓ, construit selon la présente invention ;
la figure 2 est un diagramme hygrométrique des produits de combustion indiquant le rendement obtenu avec l'appareil de chauffage au gaz d'eau par contact direct selon la présente invention ;
la figure 3 est un autre schéma simplifié d'un autre mode de réalisation d'un appareil de chauffage d'eau de rendement élevé ; et
la figure 4 représente un autre schéma simplifié d'un autre mode de réalisation de l'appareil de chauffage d'eau de rendement élevé selon la présente invention.

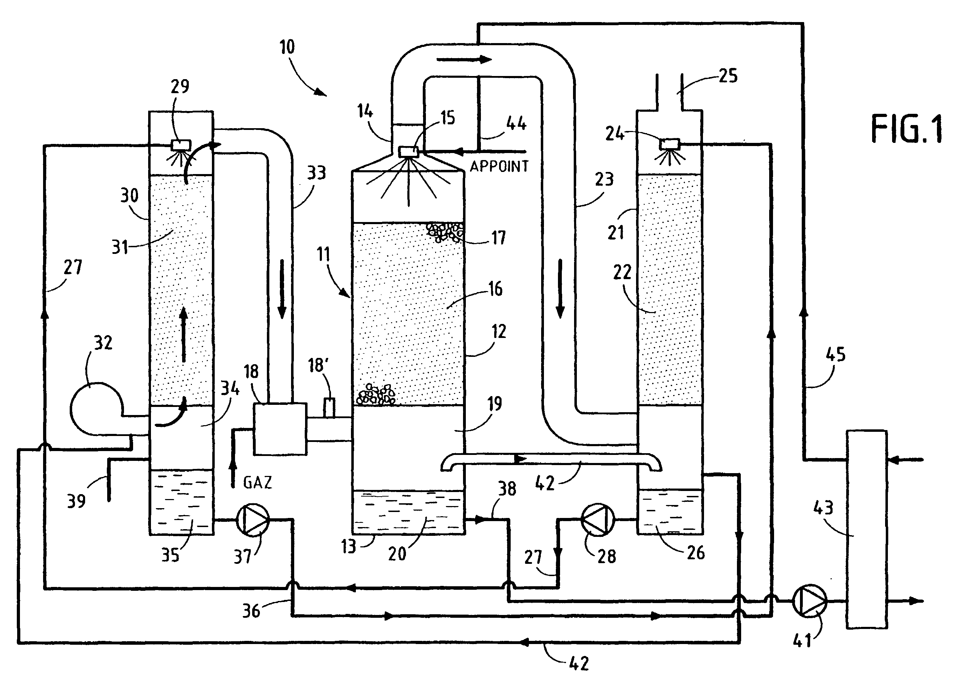

On se réfère maintenant aux dessins et, plus précisément, à la figure 1 qui représente de façon générale un exemple d'appareil de chauffage au gaz d'eau par contact direct selon la présente invention, portant la référence générale 10. L'appareil 10 comprend un boîtier 11 de chauffage d'eau par contact direct comprenant un boîtier vertical allongé 12 qui délimite une paroi latérale circonférentielle ayant une paroi d'extrémité inférieure 13 et une ouverture centrale limitée à une extrémité supérieure qui délimite une cheminée de sortie 14 et par laquelle les gaz brûlés sont évacués, comme décrit dans la suite. Un dispositif de déchargement d'eau sous forme d'une buse 15 de pulvérisation est placé dans le boîtier à une certaine distance au-dessus d'un garnissage principal 16 de corps 17 d'échange de chaleur qui peut être formé de pièces métalliques cylindriques creuses, de manière bien connue dans la technique.

Un brûleur à gaz 18 est raccordé à la paroi latérale du boîtier cylindrique 12 au-dessous du garnissage 16 et dirige une flamme dans la chambre 19 de combustion au-dessous du garnissage. Ce brûleur 18 est de préférence équipé d'une buse pilote 18' qui reçoit du gaz combustible, par exemple du gaz naturel, et de l'air frais, si bien que la flamme du brûleur ne peut pas s'éteindre à cause de l'utilisation d'air saturé en eau mélangé au gaz. Un réservoir ou dispositif collecteur d'eau 20 est délimité à une partie d'extrémité inférieure du boîtier 12 pour la collecte de l'eau chaude qui est obtenue à partir de la buse de pulvérisation 15 et qui est chauffée lorsqu'elle tombe par percolation dans le boîtier 12 et circule dans le garnissage 16, chauffé par la flamme et les gaz brûlés lorsqu'ils remontent dans le garnissage.

Un boîtier cylindrique secondaire 21 a un garnissage secondaire 22 de corps d'échange de chaleur dans lequel sont dirigés des gaz chauds de combustion provenant de la cheminée 14 de sortie, depuis l'espace qui se trouve sous le garnissage secondaire 22, par un conduit 23 de raccordement. Ces gaz évacués sont refroidis par de l'eau froide pulvérisée sur le garnissage secondaire par une buse supplémentaire 24 de pulvérisation d'eau placée au-dessus du garnissage secondaire. Lorsque l'eau et le garnissage se refroidissent, les gaz brûlés chauds montent dans le garnissage secondaire 22 et sortent par la cheminée 25. L'eau est chauffée et accumulée dans un réservoir ou dispositif collecteur d'eau supplémentaire 26 formé par une partie inférieure du boîtier cylindrique secondaire 21. Les gaz évacués par la cheminée 25 ont aussi été considérablement refroidis si bien que le rendement de l'appareil est accru.

L'eau chaude provenant du réservoir 26 du boîtier cylindrique secondaire 21 est alors pompée par la pompe 28 par l'intermédiaire d'un conduit 27 vers un boîtier 30 de traitement d'air de combustion comprenant un troisième boîtier cylindrique 30 qui contient un garnissage supplémentaire 31 de corps d'échange de chaleur et au-dessus duquel est placée une troisième buse 29 de pulvérisation. A la partie inférieure de ce troisième garnissage, un ventilateur 32 est raccordé afin qu'il introduise de l'air ambiant sous le troisième garnissage et transmette ainsi de l'air ambiant au brûleur. Lorsque l'air ambiant remonte dans le troisième garnissage, il se réchauffe et est humidifié par l'eau chaude qui est collectée dans le réservoir 26 du boîtier secondaire et pulvérisé sur le troisième garnissage 31 par la buse 29 de pulvérisation. Cet air humide et chaud est transmis au brûleur 18 par la conduite 33 d'alimentation en air. Cette opération augmente le point de rosée des produits de combustion et réduit les émissions d'oxydes NOₓ du brûleur à environ 6 à 8 ppm pour 3 % de O₂.

Lorsque l'eau de la buse de pulvérisation 29 descend par percolation dans le troisième garnissage 31, elle est refroidie par l'air ambiant introduit dans la chambre 34 et qui remonte par le garnissage. Cette eau refroidie est collectée dans un troisième réservoir 35 formé à une partie inférieure du boîtier cylindrique 30 et constitue la source d'eau froide d'alimentation de la seconde buse 24 d'eau placée dans le second boîtier 21. Comme représenté, une conduite 36 d'alimentation et une pompe 37 forment un trajet de raccordement du troisième réservoir 35 et de la buse 24 de pulvérisation. Un conduit 42 relie aussi le réservoir 26 du boîtier secondaire 21 au réservoir principal d'eau 20 du boîtier 11 du brûleur afin que le condensat soit dirigé du réservoir 20 vers le réservoir 26. Un conduit 42' raccorde aussi le réservoir 26 au réservoir 35 afin qu'un seul déversoir placé dans le réservoir 35 puisse être utilisé. La conduite 38 d'alimentation transmet l'eau chaude destinée à une utilisation domestique ou industrielle. Cette eau chaude peut aussi être dirigée par la pompe 41 dans un échangeur de chaleur 43, bien que de nombreux échangeurs de chaleur puissent être interconnectés en série. La conduite 44 d'eau d'appoint raccordée à la buse 15 de pulvérisation peut aussi recevoir l'eau provenant du circuit 45, raccordé à l'échangeur de chaleur 43, comme représenté. Le condensat du réservoir 35 est aussi collecté par une conduite 39 de débordement.

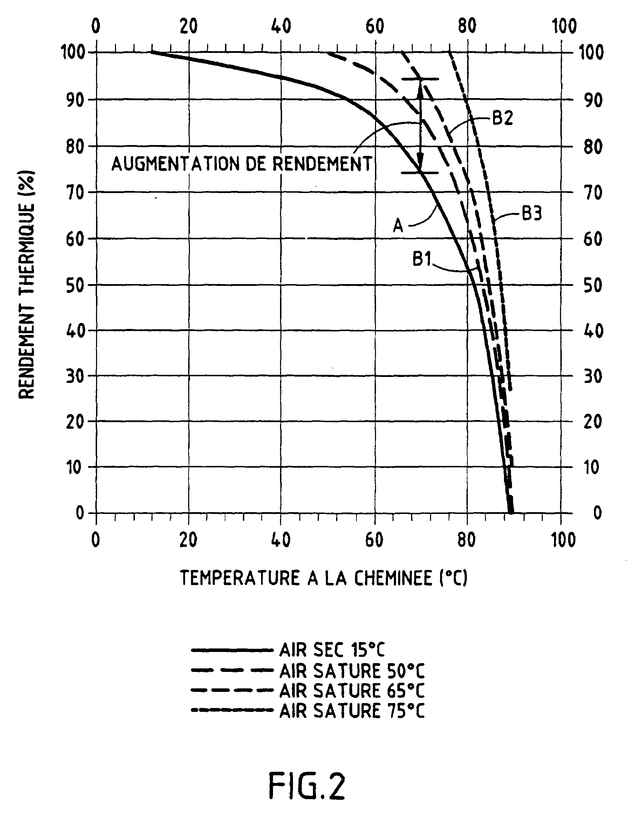

La figure 2 est un diagramme hygrométrique des produits de combustion appliqués aux appareils de chauffage d'eau par contact direct. Ce graphique représente la valeur du rendement thermique (%) en fonction de la température de la cheminée. Pour des appareils de chauffage d'eau par contact direct, la température de la cheminée est supérieure d'environ 5 °C à la température d'entrée d'eau. La courbe A indique que, lorsque les gaz de cheminée dépassent 60 °C, le rendement de l'appareil diminue considérablement à cause de l'évaporation de l'eau à chauffer. Les courbes B1, B2 et B3 indiquent l'effet d'air humidifié de combustion sur le rendement thermique de l'appareil lorsque de l'air est saturé à des températures différentes. A titre d'exemple, pour une température de cheminée de 80 °C, le rendement thermique d'un appareil de chauffage d'eau par contact direct, utilisant un système d'alimentation en air et en vapeur d'eau tel que décrit dans le présent mémoire, peut augmenter d'environ 64 à 84 % lorsque de l'air saturé à 65 °C est utilisé pour la combustion.

L'augmentation du rendement thermique est due à la récupération de la chaleur latente des produits de combustion. La vapeur d'eau introduite dans l'air de combustion réduit la température de flamme et a un effet sur les réactions chimiques de la combustion et provoque une réduction de la formation des oxydes NOₓ.

Dans le cas d'une application normale, lorsque la température de l'eau à l'entrée d'un appareil de chauffage d'eau par contact direct est d'environ 60°C, une grande quantité d'eau est perdue par évaporation. Dans ces conditions, la dureté de l'eau augmente et une unité de traitement d'eau est nécessaire pour transmettre de l'eau d'appoint. Dans certaines conditions de fonctionnement, l'utilisation d'une pompe à vapeur d'eau réduit la quantité d'eau d'appoint et aucune unité de traitement de l'eau n'est nécessaire.

L'appareil de chauffage au gaz d'eau par contact direct selon la figure 1 a été construit pour les spécifications suivantes. L'appareil 12 de chauffage d'eau a un diamètre de 46 cm et le garnissage 16 s'étend sur une distance d'environ 91 cm. La différence de pression dans le boîtier de l'appareil de chauffage est d'environ 51 mm d'eau. Les boîtiers 21 et 30 qui peuvent être considérés comme étant des boîtiers de condenseur et d'évaporateur ont une construction pratiquement identique et leur boîtier a un diamètre de 30,5 cm et une hauteur de 244 cm. Le garnissage principal s'étend sur 120 cm et le boîtier donne une différence de pression de 46 mm d'eau. La circulation de l'eau dans les boîtiers 21 et 30 correspond à environ 95 l/min dans les conduits 27 et 36 qui sont des conduits d'environ 32 mm). La pression donnée par les pompes 28 et 37 est d'environ 10,67 m d'eau et est suffisante pour donner une pression aux buses 24 et 29 de 0,69 bar.

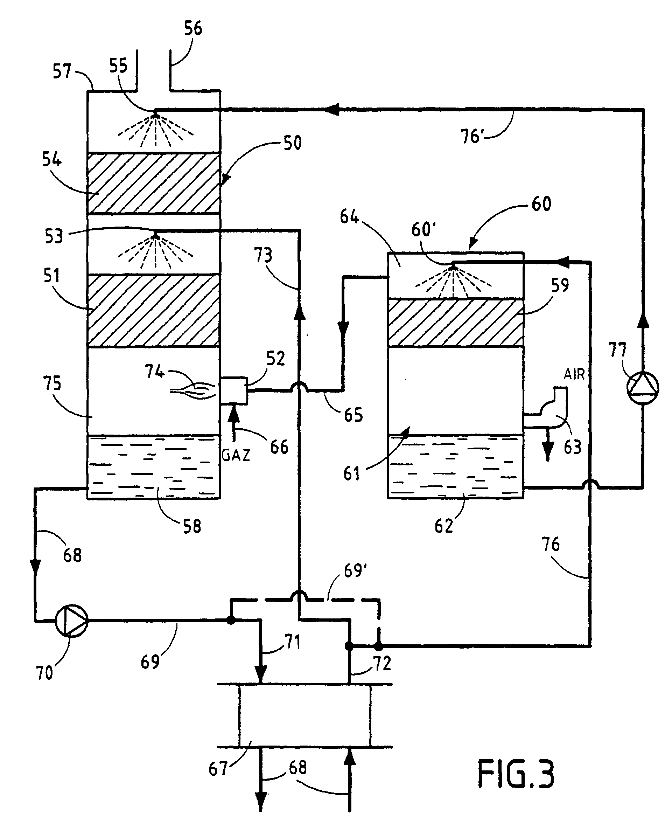

On se réfère maintenant à la figure 3 qui représente un second mode de réalisation de la présente invention et sur laquelle l'appareil de chauffage d'eau par contact direct de rendement élevé a une construction comprenant deux boîtiers, c'est-à-dire un premier boîtier 50 et un second boîtier 60. Un premier garnissage 51 de corps d'échange de chaleur est monté sur le premier boîtier au-dessus du brûleur 52. Une buse 53 de pulvérisation est fixée au-dessus du premier garnissage 51 de la manière décrite précédemment. Un second garnissage 54 de corps d'échange de chaleur est aussi fixé dans le boîtier 50 à une certaine distance au-dessus de la buse de pulvérisation 53 afin que les gaz chauds remontant dans le boîtier 50 subissent un refroidissement supplémentaire. Une seconde buse 55 de pulvérisation est raccordée au-dessus du second garnissage 54 et une cheminée 56 d'échappement est fixée à la paroi supérieure 57 du boîtier 50. La partie inférieure du boîtier 50 délimite un réservoir collecteur d'eau 58.

Un troisième garnissage de corps 59 d'échange de chaleur est fixé dans le second boîtier 50. Une troisième buse de pulvérisation 60' est fixée au-dessus du troisième garnissage 59. Un espace 61 est délimité sous le second garnissage et au-dessus du réservoir d'eau 62 formé à la partie inférieure du second boîtier 60. Un ventilateur 63 d'air est raccordé à l'espace 61 afin qu'il transmette l'air ambiant à cet espace et dans le troisième garnissage 59 dans lequel l'air est préchauffé et humidifié, et il est raccordé au brûleur 52 depuis la chambre supérieure 64 par un conduit 65 de transport si bien que l'air humide sortant du second boîtier 60 se mélange au gaz transmis au brûleur 52 par la conduite 66 de gaz. Grâce à l'humidification de cet air, une augmentation du point de rosée et une réduction des émissions d'oxydes NOₓ sont assurées comme décrit précédemment.

Comme représenté, l'eau chaude qui se collecte dans le réservoir 58 du premier boîtier 50 est transportée dans un échangeur de chaleur 67 ou plusieurs échangeurs de chaleur connectés en série comme indiqué par la flèche 68 par l'intermédiaire d'une conduite 69 d'alimentation dans laquelle est raccordée une pompe 70 qui fait circuler l'eau dans l'échangeur de chaleur 67, si bien qu'un fluide externe est chauffé. L'eau chaude du réservoir 58 pénètre dans l'échangeur de chaleur 67 par une entrée 71 et sort de l'échangeur vers une sortie 72 qui est raccordée par un conduit 73 à la première buse 53 de pulvérisation placée au-dessus du garnissage 51 si bien que l'eau refroidie sortant de l'échangeur de chaleur est à nouveau chauffée par circulation dans les corps d'échange de chaleur placés dans le premier garnissage 51 et par contact avec les gaz chauds ascendants et par contact avec la flamme 74 formée dans le boîtier 75 de combustion du premier boîtier 50.

La buse 60' de pulvérisation placée au-dessus du troisième garnissage 59 est aussi raccordée à la sortie 72 de l'échangeur de chaleur 67 par un conduit 76 et l'eau présente dans le conduit, bien qu'elle soit refroidie, peut être à une température suffisante pour chauffer et humidifier l'air ambiant transmis dans le boîtier 60 par le ventilateur 63. L'eau qui s'accumule dans le réservoir 62 alimente la seconde buse 55 de pulvérisation par un circuit d'alimentation qui est constitué d'un conduit 76' et d'une pompe 77. Il faut noter que la buse 60' de pulvérisation peut aussi être raccordée directement à la conduite 69 d'alimentation à partir du réservoir 58 (voir le circuit en trait mixte 69') qui alimente l'entrée de l'échangeur de chaleur 71 afin que l'eau la plus chaude soit utilisée pour l'humidification de l'air ambiant transmis avant son mélange avec le gaz dans le brûleur 52. On note ainsi que la configuration de l'appareil décrit et représenté sur la figure 3 forme une autre disposition grâce à laquelle on obtient les résultats souhaitables de la présente invention avec utilisation uniquement de deux boîtiers verticaux cylindriques allongés 50 et 60.

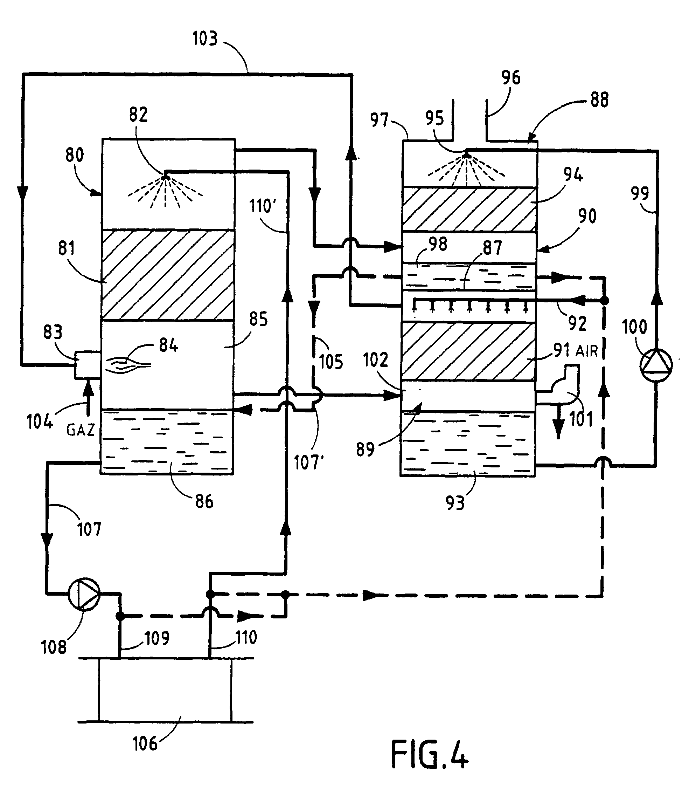

On se réfère maintenant à la figure 4 ; elle représente un autre mode de réalisation de la présente invention. Comme représenté, deux boîtiers seulement sont présents, un premier boîtier 80 et un second boîtier 90. Le premier boîtier 80 a un garnissage unique 81 de corps d'échange de chaleur et une buse 82 de pulvérisation est fixée au-dessus du garnissage. Un brûleur 83 est raccordé à une paroi latérale du boîtier 80 et transmet une flamme chaude 84 dans la chambre de combustion 85 formée dans le brûleur. Un réservoir d'accumulation d'eau 86 est délimité à l'extrémité inférieure du boîtier 80.

Le second boîtier 90 est divisé en deux sections par une paroi 87 de séparation afin qu'une chambre supérieure 88 et une chambre inférieure 89 soient délimitées. Le troisième garnissage 91 des corps d'échange de chaleur est fixé dans la chambre inférieure 89 et un dispositif 92 de pulvérisation est raccordé au-dessus du garnissage. Le troisième réservoir collecteur d'eau 93 est délimité dans une partie inférieure de la chambre inférieure.

Dans la chambre supérieure 88, le second garnissage 94 de corps d'échange de chaleur est aussi incorporé et une seconde buse 95 de pulvérisation est fixée au-dessus du garnissage si bien qu'elle pulvérise de l'eau sur ce garnissage pour le refroidissement des produits chauds de combustion qui sont évacués par la cheminée 96 fixée à la paroi supérieure 97 du boîtier 90. Un réservoir collecteur d'eau 98 est délimité sous le second garnissage 94 et au-dessus de la paroi 87 de séparation. Comme représenté dans le présent mémoire, la buse 95 de pulvérisation reçoit de l'eau du troisième réservoir 93 dans la chambre inférieure 89 par un circuit d'alimentation constitué d'un conduit 99 et d'une pompe 100.

Un ventilateur d'air 101 transmet l'air ambiant à la chambre 102 délimitée sous le troisième garnissage 91 et le troisième réservoir d'eau 93. Cet air remonte dans le garnissage 91 et il est chauffé et humidifié par l'eau chaude qui est distribuée par le dispositif 92 de pulvérisation et par les corps 91 d'échange de chaleur et le garnissage. Cet air chaud et humide est alors transmis par le conduit 103 au brûleur 83 dans lequel il est mélangé au gaz transmis au brûleur, par la conduite 104 de gaz, afin que le point de rosée des produits de combustion soit accru et que les émissions d'oxydes NOₓ produites par la flamme 84 soient réduites, comme décrit précédemment. Comme aussi décrit précédemment, le second réservoir 98 peut aussi être raccordé par un conduit 105 au premier réservoir 86 placé dans le premier boîtier 80. Il s'agit d'une caractéristique éventuelle lorsque le second réservoir n'assure pas l'alimentation du dispositif 92 de pulvérisation dans la chambre inférieure du second boîtier.

Le dispositif de pulvérisation 92 de la chambre inférieure du second boîtier peut aussi recevoir de l'eau chaude d'un échangeur de chaleur 106 qui est représenté sous forme raccordée au premier réservoir 86 du premier boîtier 80. Un circuit d'alimentation constitué d'un conduit 107 et d'une pompe 108 alimente l'entrée 109 de l'échangeur de chaleur 106. La sortie 110 de l'échangeur de chaleur, comme décrit précédemment en référence aux autres modes de réalisation, est aussi connectée à la buse 82 de pulvérisation fixée au-dessus du premier garnissage 81 placé dans le premier boîtier 80. Comme décrit précédemment, le dispositif 92 de pulvérisation du troisième garnissage peut aussi être raccordé soit à l'entrée 109 de l'échangeur de chaleur, soit à sa sortie 110. Dans le cas d'un tel raccordement, le conduit 105, représenté en trait mixte, assure le raccordement du troisième réservoir 98 au premier réservoir 86. Une autre conduite 107' relie le réservoir 86 au réservoir 93 afin qu'elle permette un déversement final dans le réservoir d'eau froide 93. La conduite 110' de sortie de l'échangeur de chaleur 106 alimente la buse de pulvérisation 82.

## Revendications

1. Appareil de chauffage au gaz pour le chauffage d'eau par contact direct, comprenant un premier boîtier (10 ; 50 ; 80) ayant une paroi latérale circonférentielle, une paroi fermée d'extrémité inférieure et une cheminée raccordée à la partie d'extrémité supérieure du premier boîtier (10 ; 50 ; 80), un dispositif de déchargement d'eau (15 ; 53 ; 82) placé dans le boîtier, un brûleur (18 ; 52 ; 83) disposé du côté du premier boîtier (10 ; 50 ; 80), une conduite d'alimentation en gaz combustible raccordée au brûleur (18 ; 52 ; 83) et destinée à transmettre un gaz combustible au brûleur (18 ; 52 ; 83), un conduit (33 ; 65 ; 103) d'alimentation en air de combustion raccordé au brûleur (18 ; 52 ; 83), un dispositif collecteur d'eau (20 ; 58 ; 86) placé sous le brûleur (18 ; 52 ; 83) et destiné à collecter l'eau chaude, un dispositif à boîtier supplémentaire (30 ; 60 ; 90), muni d'un dispositif supplémentaire (29 ; 60' ; 92) de déchargement d'eau et d'un dispositif collecteur d'eau supplémentaire (35 ; 62 ; 93), un premier dispositif à conduit destiné à transmettre l'eau chaude du dispositif collecteur d'eau (20 ; 58 ; 86) placé dans le premier boîtier (10 ; 50 ; 80), et un dispositif à conduit supplémentaire destiné à transmettre l'eau du dispositif à boîtier supplémentaire (30 ; 60 ; 90), **caractérisé en ce que** le premier boîtier (10 ; 50 ; 80) comprend un premier dispositif à garnissage (16 ; 51 ; 81) possédant des éléments d'échange de chaleur et disposé entre le dispositif de déchargement d'eau (15 ; 53 ; 82) et le brûleur (18 ; 52 ; 83), **en ce que** le dispositif à boîtier supplémentaire (30 ; 60 ; 90) comprend un dispositif supplémentaire à garnissage (31 ; 59 ; 91) ayant des éléments d'échange de chaleur et disposé à une certaine distance au-dessous du dispositif supplémentaire (29 ; 60' ; 92) de déchargement d'eau pour la formation d'une source d'air humide destiné à être mélangé au gaz combustible afin que le point de rosée des produits de combustion soit accru et que les émissions d'oxydes Noₓ soient réduites après combustion, le dispositif supplémentaire à garnissage (31 ; 59 ; 91) étant lui-même placé dans le boîtier supplémentaire (30 ; 60 ; 90) au-dessus du dispositif collecteur d'eau supplémentaire (35 ; 62 ; 93) destiné à collecter l'eau qui a traversé le dispositif à garnissage supplémentaire (30 ; 59 ; 21) par percolation.

2. Appareil de chauffage d'eau selon la revendication 1, **caractérisé en ce que** le dispositif à garnissage (16) est un premier garnissage de corps d'échange de chaleur placé afin qu'il gêne l'écoulement des produits ascendants de combustion dans le premier boîtier (10), le dispositif à boîtier supplémentaire comprenant un second (21) et un troisième (30) boîtier, le dispositif à garnissage supplémentaire (22, 31) étant composé d'un second et d'un troisième garnissage (22, 31) de corps d'échange de chaleur disposés afin qu'ils gênent l'écoulement respectivement des gaz de cheminée et de l'air ascendant respectivement dans le second (21) et le troisième (30) boîtier, le dispositif (24, 29) de déchargement d'eau supplémentaire comprenant un second et un troisième dispositif de déchargement d'eau (24, 29) associés au second et au troisième garnissage (22, 31) respectivement, le second (21) et le troisième (30) boîtier ayant un second et un troisième dispositif collecteur d'eau (26, 35) respectivement placés sous le second ou le troisième garnissage respectivement associé, le second garnissage (22) étant disposé en aval de la cheminée qui est raccordée au premier boîtier (10) de manière qu'il gêne la circulation des gaz brûlés évacués du premier boîtier (10) et que les gaz brûlés soient refroidis, le troisième garnissage (31) étant placé en amont du conduit d'alimentation en air de combustion du premier boîtier (10) afin que l'air ambiant soit préchauffé et humidifié avec formation d'air humide.

3. Appareil de chauffage d'eau selon la revendication 2, **caractérisé en ce que** le troisième dispositif (29) de déchargement d'eau est disposé au-dessus du troisième garnissage (31) afin que de l'eau chaude soit pulvérisée à partir du dispositif collecteur d'eau (26) du second boîtier (21) et que l'eau chaude traverse le troisième garnissage (31) par percolation en assurant le chauffage et l'humidification de l'air qui circule à contre-courant de l'eau chaude qui circule par percolation afin que de l'air humide et chaud soit transmis au brûleur (18).

4. Appareil de chauffage d'eau selon la revendication 3, **caractérisé en ce que** l'eau collectée dans le troisième dispositif collecteur d'eau (35) est transmise au second dispositif (24) de déchargement d'eau par un circuit à conduit de retour (36) et une pompe (37).

5. Appareil de chauffage d'eau selon la revendication 3, **caractérisé en ce que** la cheminée du premier boîtier (10) est raccordée au second boîtier (21) sous le second garnissage (22) des éléments d'échange de chaleur, le second dispositif (24) de déchargement d'eau provoquant la circulation d'eau par percolation dans le second garnissage (22) dans lequel elle est chauffée par les gaz brûlés évacués et est collectée dans le second dispositif collecteur d'eau (26) constitué par un réservoir formé par une partie d'extrémité inférieure du second boîtier (21).

6. Appareil de chauffage d'eau selon la revendication 5, **caractérisé en ce que** l'eau chaude provenant du second réservoir (26) est refroidie lorsqu'elle traverse le troisième garnissage (31) par percolation et est renvoyée au second dispositif (24) de déchargement d'eau par un circuit à conduit de retour et une pompe.

7. Appareil de chauffage d'eau selon la revendication 2, **caractérisé en ce que** le troisième dispositif à réservoir (35) est constitué par une partie d'extrémité inférieure du troisième boîtier (30).

8. Appareil de chauffage d'eau selon la revendication 1, **caractérisé en ce que** la cheminée est une cheminée de dimension limitée placée au centre de la paroi supérieure du premier boîtier (10, 50, 80).

9. Appareil de chauffage d'eau selon la revendication 5, **caractérisé en ce qu'**un conduit supplémentaire de débordement (42) est raccordé entre le second réservoir (26) et le troisième dispositif collecteur d'eau (35) pour le transfert d'eau chaude de débordement du second réservoir (26) au troisième dispositif collecteur d'eau (35).

10. Appareil de chauffage d'eau selon la revendication 2, **caractérisé en ce que** l'air destiné à être transmis à la conduite d'alimentation est de l'air ambiant, l'air ambiant étant chauffé par le troisième garnissage (31), l'air transmis au brûleur (18) étant à une température comprise entre environ 45 et 75 °C et étant pratiquement saturé à cette température, le troisième dispositif (29) de déchargement d'eau étant raccordé à une alimentation en eau chaude à environ 50 à 60 °C, l'eau chaude du dispositif collecteur d'eau (20) du premier boîtier (10) étant à une température d'environ 80 à 90 °C.

11. Appareil de chauffage d'eau selon la revendication 2, **caractérisé en ce que** l'eau du troisième dispositif à réservoir (35) placé sous le troisième garnissage (31) est refroidie à une température d'environ 30 à 35 °C par l'air qui remonte dans le troisième garnissage (31) et est transmise au second dispositif (24) de déchargement d'eau par un circuit à conduit de retour (36) afin qu'elle soit réchauffée par le second garnissage (22) à une température d'environ 50 à 60°C.

12. Appareil de chauffage d'eau selon la revendication 1, **caractérisé en ce que** l'air préchauffé et humidifié est mélangé à du gaz naturel afin que le point de rosée des produits de combustion soit notablement accru et que les émissions d'oxydes NOₓ des gaz de cheminée créés par le brûleur (18, 52, 83) soient réduites, l'eau chaude du dispositif collecteur d'eau (20, 58, 86) du premier boîtier (10, 50, 80) étant à une température d'environ 80 à 90 °C.

13. Appareil de chauffage d'eau selon la revendication 2, **caractérisé en ce qu'**il comporte en outre un dispositif d'échange de chaleur raccordé entre le dispositif collecteur d'eau (20) du premier boîtier (10) et le premier dispositif (15) de déchargement d'eau du premier boîtier (10), le dispositif d'échange de chaleur extrayant la chaleur de l'eau qui s'accumule dans le dispositif collecteur d'eau (20) pour assurer un chauffage, et un conduit d'alimentation de l'échangeur de chaleur (43) et du premier dispositif (15) de déchargement d'eau.

14. Appareil de chauffage d'eau selon la revendication 1, **caractérisé en ce que** le dispositif à garnissage supplémentaire (54, 59) est constitué d'un second garnissage (59) de corps d'échange de chaleur placé dans un second boîtier (60), le second boîtier constituant le dispositif à boîtier supplémentaire (60) et ayant un dispositif de circulation d'air destiné à faire circuler l'air dans le second garnissage (59), et un conduit (65) raccordé au second boîtier au-dessus du second garnissage (59) afin qu'il transmette au brûleur (52) de l'air humide destiné à être mélangé au gaz combustible, le dispositif à garnissage supplémentaire (54, 59) comprenant aussi un troisième garnissage (54) placé dans le premier boîtier (50) au-dessus du premier dispositif à garnissage (51), le dispositif (55, 60') de déchargement d'eau supplémentaire comprenant un second (60') et un troisième (55) dispositif de déchargement d'eau disposés au-dessus du second (59) et du troisième (54) garnissage respectivement, le dispositif collecteur d'eau supplémentaire (62) comprenant un troisième dispositif collecteur d'eau (62) délimité dans un tronçon inférieur du second boîtier (60) et un dispositif à conduit d'alimentation destiné à transmettre l'eau du troisième dispositif collecteur d'eau (62 ) au troisième dispositif (55) de déchargement d'eau afin que les gaz d'échappement remontant dans le premier boîtier (50) vers la cheminée qui constitue une cheminée d'évacuation subissent un refroidissement supplémentaire.

15. Appareil de chauffage d'eau selon la revendication 14, **caractérisé en ce que** le dispositif à conduit d'alimentation est constitué d'une pompe (77) et d'une conduite (76') reliant le tronçon inférieur du second boîtier au troisième dispositif (55) de déchargement d'eau qui est une buse de pulvérisation.

16. Appareil de chauffage d'eau selon la revendication 14, **caractérisé en ce qu'**il comporte en outre un dispositif (67) d'échange de chaleur raccordé entre le dispositif collecteur d'eau (58) du premier boîtier (50) et le dispositif de déchargement d'eau (53) du premier boîtier (50) qui est placé au-dessus du premier dispositif à garnissage (51), le dispositif d'échange de chaleur (67) extrayant la chaleur de l'eau chaude qui s'accumule dans le dispositif collecteur d'eau (58) pour assurer un chauffage, et un dispositif à conduit d'alimentation destiné à alimenter l'échangeur de chaleur (67) et le dispositif de déchargement d'eau (53), le premier dispositif de déchargement d'eau étant raccordé au dispositif à conduit d'alimentation à la sortie de l'échangeur de chaleur (67).

17. Appareil de chauffage d'eau selon la revendication 16, **caractérisé en ce que** le deuxième dispositif (60') de déchargement d'eau est aussi raccordé à la sortie de l'échangeur de chaleur (67).

18. Appareil de chauffage d'eau selon la revendication 16, **caractérisé en ce que** le deuxième dispositif (60') de déchargement d'eau est raccordé à une entrée de l'échangeur de chaleur (67) afin qu'il reçoive l'eau chaude du dispositif collecteur d'eau (58) du premier boîtier (50).

19. Appareil de chauffage d'eau selon la revendication 1, **caractérisé en ce que** le dispositif à garnissage supplémentaire (94, 91) est constitué d'un second et d'un troisième garnissage de corps d'échange de chaleur fixés à distance et isolés mutuellement dans un second boîtier (90), une paroi de séparation (87) formée dans le second boîtier divisant celui-ci en une chambre inférieure (89) et une chambre supérieure (88), le second boîtier (90) constituant le dispositif à boîtier supplémentaire et ayant un dispositif de déplacement d'air raccordé à la chambre inférieure afin que l'air circule dans le troisième garnissage (91) placé à l'intérieur, le dispositif collecteur d'eau supplémentaire (98, 93) comprenant un troisième réservoir collecteur d'eau (93) placé dans une partie inférieure (89) de la chambre inférieure et un second réservoir collecteur d'eau (98) placé au-dessus de la paroi de séparation (87) dans la chambre supérieure (88), le second garnissage (94) étant placé au-dessus du second réservoir collecteur d'eau (98), une cheminée communiquant avec la seconde chambre, le dispositif (95, 92) de déchargement d'eau supplémentaire comprenant un second et un troisième dispositif d'évacuation d'eau fixés dans un espace délimité au-dessus du second et du troisième garnissage (94, 91) respectivement, le dispositif à conduit d'alimentation étant destiné à transmettre de l'eau du troisième réservoir collecteur d'eau (93) au second dispositif (95) de déchargement, et un dispositif de circulation d'air étant destiné à faire circuler l'air humide préchauffé de l'espace délimité au-dessus du troisième garnissage (91) vers le brûleur (83) afin qu'il soit mélangé au gaz combustible.

20. Appareil de chauffage d'eau selon la revendication 19, **caractérisé en ce qu'**il comporte en outre un dispositif à conduit raccordant le second réservoir collecteur d'eau (98) au dispositif à réservoir du premier boîtier (80), le dispositif à réservoir du premier boîtier (80) étant raccordé à un dispositif échangeur de chaleur (106) par le dispositif à conduit d'alimentation de manière que de la chaleur soit extraite de l'eau chaude qui s'accumule dans le dispositif collecteur d'eau (86) pour assurer un chauffage.

21. Appareil de chauffage d'eau selon la revendication 20, **caractérisé en ce que** le dispositif échangeur de chaleur (106) comporte un raccord d'entrée raccordé au dispositif à réservoir du premier boîtier (80) et une sortie raccordée au dispositif de déchargement d'eau (82) du premier boîtier (80) afin que de l'eau froide soit transmise au dispositif de déchargement d'eau (82).

22. Appareil de chauffage d'eau selon la revendication 21, **caractérisé en ce que** le troisième dispositif (92) de déchargement d'eau est connecté à la sortie de l'échangeur de chaleur (106).

23. Appareil de chauffage d'eau selon la revendication 21, **caractérisé en ce que** le troisième dispositif (92) de déchargement d'eau est raccordé au dispositif à réservoir d'eau du premier boîtier (80).

24. Appareil de chauffage d'eau selon la revendication 19, **caractérisé en ce que** le troisième dispositif (92) de déchargement d'eau est raccordé au second réservoir collecteur d'eau (98) placé dans la chambre supérieure (88) du second boîtier (90).

25. Appareil de chauffage d'eau selon la revendication 2, **caractérisé en ce que** le premier dispositif à boîtier (10 ; 50 ; 80)et le dispositif à boîtier supplémentaire (21, 30 ; 60 ; 90) sont des boîtiers cylindriques verticaux allongés.

26. Appareil de chauffage d'eau selon la revendication 1, **caractérisé en ce que** le brûleur (18) comporte en outre un dispositif pilote (18') destiné à empêcher l'extinction de sa flamme.

27. Appareil de chauffage d'eau selon la revendication 1, **caractérisé en ce que** le gaz combustible est le gaz naturel.

## Patentansprüche

1. Gas-Heizvorrichtung zum Erhitzen von Wasser durch direkten Kontakt, die umfasst ein erstes Gehäuse (10; 50; 80), das eine seitliche Umfangswand, eine geschlossene untere Endwand und einen mit dem oberen Endteil des ersten Gehäuses (10; 50; 80) verbundenen Rauchgasabzug umfasst, eine in dem Gehäuse angeordnete Einrichtung (15; 53; 82) zum Abgeben von Wasser, einen seitlich von dem ersten Gehäuse (10; 50; 80) angeordneten Brenner (18; 52; 83), eine mit dem Brenner (18; 52; 83) verbundene und zum Zuführen eines brennbaren Gases zum Brenner (18; 52; 83) bestimmte Speiseleitung für brennbares Gas, eine mit dem Brenner (18; 52; 83) verbundene Leitung (33; 65; 103) zum Zuführen von Verbrennungsluft, eine Einrichtung (20; 58; 86) zum Sammeln von Wasser, die unter dem Brenner (18; 52; 83) angeordnet und zum Sammeln des heißen Wassers bestimmt ist, eine zusätzliche Gehäuse-Einrichtung (30; 60; 90), die mit einer zusätzlichen Einrichtung (29; 60'; 92) zum Abgeben von Wasser und einer zusätzlichen Einrichtung (35; 62; 93) zum Sammeln von Wasser ausgestattet ist, eine erste Leitungs-Einrichtung zum Überführen des heißen Wassers des in dem ersten Gehäuse (10; 50; 80) angeordneten Wassersammlers (20; 58; 86) und eine zusätzliche Leitungs-Einrichtung zum Überführen des Wassers aus der zusätzlichen Gehäuse-Einrichtung (30; 60; 90), **dadurch gekennzeichnet, dass** das erste Gehäuse (10; 50; 80) eine erste Ausrüstungs-Einrichtung (16; 51; 81) umfasst, die Wärmetauscher-Elemente besitzt und zwischen der Wasserabgabe-Einrichtung (15; 53; 82) und dem Brenner ,(18; 52; 83) angeordnet ist, dass die zusätzliche Gehäuse-Einrichtung (30; 60; 90) eine zusätzliche Ausrüstungs-Einrichtung (31; 59; 91) mit Wärmetauscherelementen umfasst, die in einem gewissen Abstand unterhalb der zusätzlichen Wasserabgabe-Einrichtung (29; 60'; 92) angeordnet ist, um eine Quelle für feuchte Luft zu bilden, die zum Mischen mit dem brennbaren Gas bestimmt ist, damit der Taupunkt der Verbrennungsprodukte erhöht wird und die Oxidemissionen NOₓ nach der Verbrennung reduziert werden, wobei die zusätzliche Ausrüstungs-Einrichtung (31; 59; 91) selbst in dem zusätzlichen Gehäuse (30; 60; 90) oberhalb der zusätzlichen Wassersammel-Einrichtung (35; 62; 93) zum Sammeln des Wassers angeordnet ist, das die zusätzliche Ausrüstungs-Einrichtung (31; 59; 91) unter Perkolation durchlaufen hat.

2. Vorrichtung zum Erhitzen von Wasser nach Anspruch 1, **dadurch gekennzeichnet, dass** die Ausrüstungs-Einrichtung (16) eine erste Wärmetauscherkörper-Ausrüstung ist, die so angeordnet ist, dass sie das Ausströmen der in dem ersten Gehäuse (10) aufsteigenden Verbrennungsprodukte behindert, wobei die zusätzliche Gehäuseeinrichtung ein zweites Gehäuse (21) und ein drittes Gehäuse (30) umfasst, und die zusätzliche Ausrüstungs-Einrichtung (22, 33) aus einer zweiten und einer dritten Wärmetauscherkörper-Ausrüstung (22, 31) zusammengesetzt ist, die so angeordnet sind, dass sie die Strömung jeweils der Kamingase und der Luft behindern, die jeweils in dem zweiten (21) und dem dritten Gehäuse (30) aufsteigen, wobei die zusätzliche Einrichtung (24, 29) zum Abgeben von Wasser eine zweite und eine dritte Einrichtung (24, 29) zum Abgeben von Wasser umfasst, die jeweils der zweiten und der dritten Ausrüstungs-Einrichtung (22, 31) zugeordnet sind, wobei das zweite (21) und das dritte Gehäuse (30) eine zweite und eine dritte Einrichtung (26, 35) zum Sammeln von Wasser haben, die jeweils unter der zugeordneten zweiten und der dritten Ausrüstungs-Einrichtung angeordnet sind, wobei die zweite Ausrüstungs-Einrichtung (22) stromab des mit dem ersten Gehäuse (10) verbundenen Kamins so angeordnet ist, dass sie die Strömung der aus dem ersten Gehäuse (10) abgeführten Rauchgase behindert und dass die Rauchgase gekühlt werden, wobei die dritte Ausrüstungs-Einrichtung (31) stromauf der Verbrennungsluft-Speiseleitung des ersten Gehäuses (10) angeordnet ist, damit die Umgebungsluft vorgeheizt und unter Bildung feuchter Luft befeuchtet wird.

3. Vorrichtung zum Erhitzen von Wasser nach Anspruch 2, **dadurch gekennzeichnet, dass** die dritte Einrichtung (29) zum Abgeben von Wasser oberhalb der dritten Ausrüstungs-Einrichtung (31) angeordnet ist, um heißes Wasser aus der Wassersammel-Einrichtung (26) des zweiten Gehäuses (21) zu zerstäuben und damit das heiße Wasser die dritte Ausrüstungs-Einrichtung (31) unter Perkolation durchströmt, wobei die Aufheizung und Befeuchtung der im Gegenstrom zum heißen Wasser durchfließenden Luft sichergestellt wird, welches unter Perkolation strömt, damit feuchte und heiße Luft zum Brenner (18) überführt wird.

4. Vorrichtung zum Erhitzen von Wasser nach Anspruch 3, **dadurch gekennzeichnet, dass** das in dem dritten Wassersammler (35) gesammelte Wasser der zweiten Vorrichtung (24) zum Abgeben von Wasser über eine Rückführleitung (36) und eine Pumpe (37) zugeführt wird.

5. Vorrichtung zum Erhitzen von Wasser nach Anspruch 3, **dadurch gekennzeichnet, dass** der Kamin des ersten Gehäuses (10) mit dem zweiten Gehäuse (21) unterhalb der zweiten Ausrüstung (22) von Wärmetauscherelementen verbunden ist, wobei die zweite Wasserabgabe-Einrichtung (24) die Zirkulation von Wasser unter Perkolation in der zweiten Ausrüstung (22) bewirkt, in welcher es durch die abgeführten Rauchgase aufgeheizt wird, und das Wasser in der zweiten Wassersammel-Einrichtung (26) gesammelt wird, der durch einen Tank gebildet wird, der von einem unteren Endteil des zweiten Gehäuses (21) gebildet ist.

6. Vorrichtung zum Erhitzen von Wasser nach Anspruch 5, **dadurch gekennzeichnet, dass** das aus dem zweiten Tank (26) kommende Wasser gekühlt wird, wenn es die dritte Ausrüstung (31) unter Perkolation durchströmt und der zweiten Wasserabgabe-Einrichtung (24) über einen Rückführleitungs-Kreislauf und eine Pumpe wieder zugeführt wird.

7. Vorrichtung zum Erhitzen von Wasser nach Anspruch 2, **dadurch gekennzeichnet, dass** die dritte Tank-Einrichtung (35) von einem unteren Endteil des dritten Gehäuses (30) gebildet ist.

8. Vorrichtung zum Erhitzen von Wasser nach Anspruch 1, **dadurch gekennzeichnet, dass** der Rauchgasabzug ein Kamin mit begrenzter Abmessung ist und inmitten der oberen Wand des ersten Gehäuses (10, 50, 80) angeordnet ist.

9. Vorrichtung zum Erhitzen von Wasser nach Anspruch 5, **dadurch gekennzeichnet, dass** eine zusätzliche Überlaufleitung (42) zwischen dem zweiten Tank (26) und dem dritten Wassersammler (35) zum Überführen von heißem Überlauf-Wasser aus dem zweiten Tank (26) in den dritten Wassersammler (35) vorgesehen ist.

10. Vorrichtung zum Erhitzen von Wasser nach Anspruch 2, **dadurch gekennzeichnet, dass** die zum Zuführen in die Speiseleitung bestimmte Luft Umgebungsluft ist, wobei die Umgebungsluft durch die dritte Ausrüstung (31) beheizt wird, und die dem Brenner (18) zugeführte Luft eine Temperatur von zwischen ungefähr 45 und 75 °C hat und bei dieser Temperatur praktisch gesättigt ist, wobei die dritte Wasserabgabe-Einrichtung (29) an eine Zufuhr von ungefähr 50 bis 60 °C heißem Wasser verbunden ist, und das Heißwasser aus dem Wassersammler (20) des ersten Gehäuses (10) bei einer Temperatur von ungefähr 80 bis 90 °C ist.

11. Vorrichtung zum Erhitzen von Wasser nach Anspruch 2, **dadurch gekennzeichnet, dass** das Wasser des dritten Tanks (35) unter der dritten Ausrüstung (31) auf eine Temperatur von ungefähr 30 bis 35 °C durch die Luft gekühlt wird, die in der dritten Ausrüstung (31) aufsteigt, und der zweiten Wasserabgabe-Einrichtung (24) durch eine Rückführleitung (36) zugeführt wird, damit es durch die zweite Ausrüstung (22) auf eine Temperatur von ungefähr 50 bis 60 °C aufgeheizt wird.

12. Vorrichtung zum Erhitzen von Wasser nach Anspruch 1, **dadurch gekennzeichnet, dass** die vorgewärmte und befeuchtete Luft mit Erdgas vermischt wird, damit der Taupunkt der Verbrennungsprodukte merklich erhöht und die Oxidemissionen NOₓ der von dem Brenner (18, 52, 83) erzeugten Rauchgase reduziert werden, wobei das heiße Wasser aus der Wassersammel-Einrichtung (20, 58, 86) des ersten Gehäuses (10, 50, 80) bei einer Temperatur von ungefähr 80 bis 90 °C ist.

13. Vorrichtung zum Erhitzen von Wasser nach Anspruch 2, **dadurch gekennzeichnet, dass** sie ferner eine Wärmetauscher-Einrichtung umfasst, die zwischen den Wassersammler (20) des ersten Gehäuses (10) und die erste Wasserabgabe-Einrichtung (15) des ersten Gehäuses (10) geschaltet ist, wobei die Wärmetauscher-Einrichtung, um eine Beheizung sicherzustellen, die Wärme des Wassers entzieht, das sich in dem Wassersammler (20) ansammelt, und eine Leitung zum Speisen des Wärmetauschers (43) und der ersten Wasserabgabe-Einrichtung (15).

14. Vorrichtung zum Erhitzen von Wasser nach Anspruch 1, **dadurch gekennzeichnet, dass** die zusätzliche Ausrüstungs-Einrichtung (54, 59) von einer ersten Wärmetauscherkörper-Ausrüstung (59) gebildet ist, die in einem zweiten Gehäuse (60) angeordnet ist, wobei das zweite Gehäuse die zusätzliche Gehäuse-Einrichtung (60) bildet und eine Luftzirkulations-Einrichtung hat, die zum Zirkulieren Lassen des Wassers in der zweiten Ausrüstung (59) bestimmt ist, und eine über der zweiten Ausrüstung (59) an das zweite Gehäuse angeschlossene Leitung (65) zum Überführen feuchter, zum Mischen mit dem brennbaren Gas bestimmter Luft zum Brenner (52), wobei die zusätzliche Ausrüstungs-Einrichtung (54, 59) auch eine dritte Ausrüstung (54) umfasst, die in dem ersten Gehäuse (50) oberhalb der ersten Ausrüstungs-Einrichtung (51) angeordnet ist, wobei die zusätzliche Wasserabgabe-Einrichtung (55, 60') eine zweite (60') und eine dritte (55) Wasserabgabe-Einrichtung umfasst, die jeweils oberhalb der zweiten (59) und der dritten (54) Ausrüstung angeordnet sind, wobei die zusätzliche Wassersammel-Einrichtung (62) einen dritten Wassersammler (62) umfasst, der von einem unteren Abschnitt des zweiten Gehäuses (60) umgrenzt ist, und eine Speiseleitungs-Einrichtung zum Überführen des Wassers aus dem dritten Wassersammler (62) zu der dritten Wasserabgabe-Einrichtung (55), damit die in dem ersten Gehäuse (50) zu dem einen Rauchgasabzug bildenden Kamin aufsteigenden Rauchgase eine zusätzliche Abkühlung erfahren.

15. Vorrichtung zum Erhitzen von Wasser nach Anspruch 14, **dadurch gekennzeichnet, dass** die Speiseleitungs-Einrichtung von einer Pumpe (77) und einer Leitung (76') gebildet ist, welche den unteren Abschnitt des zweiten Gehäuses mit der dritten Wasserabgabe-Einrichtung (55) verbindet, die eine Zerstäubungsdüse ist.

16. Vorrichtung zum Erhitzen von Wasser nach Anspruch 14, **dadurch gekennzeichnet, dass** sie ferner eine zwischen den Wassersammler (58) des ersten Gehäuses (50) und die Wasserabgabe-Einrichtung (53) des ersten Gehäuses (50) geschaltete Wärmetauscher-Einrichtung (67)umfasst, die oberhalb der ersten Ausrüstungs-Einrichtung (51) angeordnet ist, wobei die Wärmetauschereinrichtung (67) die Wärme des heißen Wassers entzieht, das sich in dem Wassersammler (58) zum Sicherstellen einer Beheizung sammelt, und eine Speiseleitungseinrichtung zum Speisen des Wärmetauschers (67) und der Wasserabgabe-Einrichtung (53), wobei die erste Wasserabgabe-Einrichtung an die Speiseleitungs-Einrichtung am Ausgang des Wärmetauschers (67) angeschlossen ist.

17. Vorrichtung zum Erhitzen von Wasser nach Anspruch 16, **dadurch gekennzeichnet, dass** die zweite Wasserabgabe-Einrichtung (60') auch an den Ausgang des Wärmetauschers (67) angeschlossen ist.

18. Vorrichtung zum Erhitzen von Wasser nach Anspruch 16, **dadurch gekennzeichnet, dass** die zweite Wasserabgabe-Einrichtung (60') an einen Eingang des Wärmetauschers (67) angeschlossen ist, damit sie das heiße Wasser von dem Wassersammler (58) des ersten Gehäuses erhält.

19. Vorrichtung zum Erhitzen von Wasser nach Anspruch 1, **dadurch gekennzeichnet, dass** die zusätzliche Ausrüstungs-Einrichtung (94, 91) von einer zweiten und einer dritten Wärmetauscherkörper-Ausrüstung gebildet ist, die mit Abstand zueinander und gegeneinander isoliert in einem zweiten Gehäuse (90) befestigt sind, wobei in dem zweiten Gehäuse eine Trennwand (87) gebildet ist, welche dieses in eine untere Kammer (89) und eine obere Kammer (88) unterteilt, wobei das zweite Gehäuse (90) die zusätzliche Gehäuse-Einrichtung bildet und eine Luftfördereinrichtung hat, die an die untere Kammer angeschlossen ist, damit Luft in der im Inneren angeordneten dritten Ausrüstung (91) zirkuliert, wobei der zusätzliche Wassersammler (98, 93) einen dritten Wassersammeltank (93) umfasst, der in einem unteren Teil (89) der unteren Kammer angeordnet ist, und einen zweiten Wassersammeltank (98), der oberhalb der Trennwand (87) in der oberen Kammer (88) angeordnet ist, wobei die zweite Ausrüstung (94) oberhalb des zweiten Wassersammeltanks (98) angeordnet ist und ein Kamin mit der zweiten Kammer kommuniziert, wobei die zusätzliche Wasserabgabeeinrichtung (95, 92) eine zweite und eine dritte Einrichtung zum Abführen von Wasser umfasst, die jeweils in einem begrenzten Raum oberhalb der zweiten und der dritten Ausrüstung (94, 91) angeordnet sind, wobei die Speiseleitungseinrichtung dazu bestimmt ist, Wasser aus dem dritten Wassersammeltank (93) der zweiten Wasserabgabe-Einrichtung (95) zuzuführen, und eine Luftfördereinrichtung, die dazu bestimmt ist, die vorgeheizte feuchte Luft aus dem oberhalb der dritten Ausrüstung (91) begrenzten Raum zu dem Brenner (83) zu fördern, um sie mit dem brennbaren Gas zu mischen.

20. Vorrichtung zum Erhitzen von Wasser nach Anspruch 19, **dadurch gekennzeichnet, dass** sie ferner eine Leitungs-Einrichtung umfasst, die den zweiten Wassersammeltank (98) an den Tank des ersten Gehäuses (80) anschließt, wobei der Tank des ersten Gehäuses (80) durch die Speiseleitungs-Einrichtung an eine Wärmetauscher-Einrichtung (106), um eine Erhitzung sicherzustellen, so angeschlossen ist, dass die Wärme dem heißen Wasser entzogen wird, das sich in dem Wassersammeltank (86) ansammelt.

21. Vorrichtung zum Erhitzen von Wasser nach Anspruch 20, **dadurch gekennzeichnet, dass** die Wärmetauscher-Einrichtung (106) einen Eingangs-Anschluss umfasst, der mit dem Tank des ersten Gehäuses (80) verbunden ist und einen Ausgang, der an die Wasserabgabe-Einrichtung (82) des ersten Gehäuses (80) angeschlossen ist, um der Wasserabgabe-Einrichtung (82) kaltes Wasser zuzuführen.

22. Vorrichtung zum Erhitzen von Wasser nach Anspruch 21, **dadurch gekennzeichnet, dass** die dritte Wasserabgabe-Einrichtung (92) an den Ausgang des Wärmetauschers (106) angeschlossen ist.

23. Vorrichtung zum Erhitzen von Wasser nach Anspruch 21, **dadurch gekennzeichnet, dass** die dritte Wasserabgabe-Einrichtung (92) an den Wassertank des ersten Gehäuses (80) angeschlossen ist.

24. Vorrichtung zum Erhitzen von Wasser nach Anspruch 19, **dadurch gekennzeichnet, dass** die dritte Wasserabgabe-Einrichtung (92) an den zweiten Wassersammeltank (98) angeschlossen ist, der in der oberen Kammer (88) des zweiten Gehäuses (90) angeordnet ist.

25. Vorrichtung zum Erhitzen von Wasser nach Anspruch 2, **dadurch gekennzeichnet, dass** die erste Gehäuse-Einrichtung (10; 50; 80) und die zusätzliche Gehäuse-Einrichtung (21, 30; 60; 90) zylindrische längliche Gehäuse in vertikaler Anordnung sind.

26. Vorrichtung zum Erhitzen von Wasser nach Anspruch 1, **dadurch gekennzeichnet, dass** der Brenner (18) außerdem eine Sicherheitseinrichtung (18') zum Behindern des Auslöschens seiner Flamme umfasst.

27. Vorrichtung zum Erhitzen von Wasser nach Anspruch 1, **dadurch gekennzeichnet, dass** das brennbare Gas Erdgas ist.

## Claims

1. A gas-fired direct-contact water heater system comprising a first housing (10; 50; 80) having a circumferential side wall, a closed bottom end wall, and a flue connected to a top end portion of the first housing (10; 50; 80), water discharge means (15; 53; 82) disposed in the housing, a burner (18; 52; 83) disposed on the side of the first housing (10; 50; 80), a combustible gas feed pipe connected to the burner (18; 52; 83) to provide a combustible gas to the burner (18; 52; 83), a combustion air feed conduit (33; 65; 103) connected to the burner (18; 52; 83), water collecting means (20; 58; 86) below the burner (18; 52; 83) for collecting hot water, a further housing means (30; 60; 90) provided with a further water discharge means (29; 60'; 92) and a further water collecting means (35; 62; 93), a first conduit means for supplying the hot water from the water collecting means (20; 58; 86) disposed in the first housing (10; 50; 80) and a further conduit means for supplying the water from the further housing means (30; 60; 90), **characterised in that** the first housing (10; 50; 80) comprises a first packing means (16; 51; 81) having heat exchange elements and located between the water discharge means (15; 53; 82) and the burner (18; 52; 83), **in that** the further housing means (30; 60; 90) comprises a further packing means (31; 59; 91) having heat exchange elements and disposed at a certain distance below the further water discharge means (29; 60'; 92) so as to producea source of humid air for admixture with the combustible gas to increase the combustion product dew point and to reduce NOₓ emission when burned, the further packing means (31; 59; 91) being itself disposed in the further housing (30; 60; 90) above the further water collecting means (35; 62; 93) for collecting water percolated through the further packing means (30; 59; 21).

2. A water heater according to claim 1, **characterised in that** the packing means (16) is a first packing of the heat exchange bodies provided in interference flow with rising combustion products in the first housing (10), the further housing means comprising a second and third housing (21, 30), the further packing means (22, 31) being comprised of a second and third packing (22, 31) of heat exchange bodies provided in interference flow respectively with the flue gases and with rising air, respectively, in the second and third housing (21, 30), the further water discharge means (24, 29) comprising a second and third water discharge means (24, 29) associated with the second and third packing (22, 31), respectively, the second and third housing (31, 30) having a second and third water collecting means (26, 35), respectively, below an associated of the second and third packing, the second packing (22) being disposed downstream of the flue connected to the first housing (10) and in interference flow with exhaust flue gases from the first housing (10) to cool the flue gases, the third packing (31) being disposed upstream of the combustion air feed conduit of the first housing (10) to preheat and humidify ambient air to produce the humid air.

3. A water heater according to claim 2, **characterised in that** the third water discharge means (29) is positioned above the third packing (31) for spraying hot water from the water collecting means (26) of the second housing (21) to cause the hot water to percolate through the third packing (31) for heating and humidifying air convected in counterflow direction to the percolating hot water to supply the hot humid air to the burner (18).

4. A water heater according to claim 3, **characterised in that** the water collected in the third water collecting means (35) is fed to the second water discharge means (24) by a feedback conduit circuit (36) and a pump (37).

5. A water heater according to claim 3, **characterised in that** the flue of the first housing (10) is connected to the second housing (21) under the second packing (22) of heat exchange elements, the second water discharge means (24) causing water to percolate through the second packing (22) where it is heated by the exhaust flue gases and collected in the second water collecting means (26) constituted by a reservoir formed by a bottom end portion of the second housing (21).

6. A water heater according to claim 5, **characterised in that** the hot water from the second reservoir (26) is cooled as it percolates through the third packing (31) and is fed back to the second water discharge means (24) through a feedback conduit circuit and a pump.

7. A water heater according to claim 2, **characterised in that** the third reservoir means (35) is constituted by a bottom end portion of the third housing (30).

8. A water heater according to claim 1, **characterised in that** the flue is a restricted flue centrally disposed in a top wall of the first housing (10, 50, 80).

9. A water heater according to claim 5, **characterised in that** a further overflow conduit (42) is connected between the second reservoir (26) and the third water collecting means (35) to transfer overflow hot water from the second reservoir (26) to the third water collecting means (35).

10. A water heater according to claim 2, **characterised in that** the air to be fed to the feed pipe is ambient air, the ambient air being heated by the third packing (31), the air fed to the burner (18) being at a temperature in the range of from about 45°C to 75°C and substantially saturated at this temperature, the third water discharge means (29) being connected to a hot water supply at about 50°C to 60°C, the hot water in the water collecting means (20) of the first housing (10) being at a temperature of about 80°C to 90°C.

11. A water heater according to claim 2, **characterised in that** the water in the third reservoir means (35) below the third packing (31) is cooled to a temperature of about 30°C to 35°C by the air rising through the third packing (31) and fed to the second water discharge means (24) by a feedback conduit circuit (36) to be reheated by the second packing (22) to a temperature of about 50°C to 60°C.

12. A water heater according to claim 1, **characterised in that** the preheated and humidified air is mixed with natural gas to substantially increase the combustion product dew point and lower the NOₓ emission of the flue gases generated by the burner (18, 52, 83), the hot water in the water collecting means (20, 58, 86) of the first housing (10, 50, 80) being at a temperature of about 80°C to 90°C.

13. A water heater according to claim 2, **characterised in that** it further comprises a heat exchange means connected between the water collecting means (20) of the first housing (10) and the first water discharge means (15) of the first housing (10), the heat exchange means extracting heat from water accumulating in the water collecting means (20) for heating purposes, and feed conduit to feed the heat exchanger (43) and the first water discharge means (15).

14. A water heater according to claim 1 **characterised in that** the further packing means (54, 59) is comprised of a second packing (59) of heat exchange bodies secured in a second housing (60), the second housing constituting the further housing means (60) and having air convection means for convecting air through the second packing (59), and a conduit (65) connected to the second housing above the second packing (59) for supplying humid air to the burner (52) for admixture with the combustible gas, the further packing means (54, 59) also comprising a third packing (54) located in the first housing (50) above the first packing means (51), the further water discharge means (55, 60') comprising second and third water discharge means (60', 55) disposed above the second and third packing (59, 54), respectively; the further water collecting means (62) comprising a third water collecting means (62) defined in a bottom section of the second housing (60), and feed conduit means to supply water from the third water collecting means (62) to the third water discharge means (55) to further cool exhaust gases rising in the first housing (50) to the flue which is an exhaust flue.

15. A water heater according to claim 14, **characterised in that** the feed conduit means is comprised of a pump (77) and pipe (76') interconnecting the bottom section of the second housing to the third water discharge means (55) which is a spray nozzle.

16. A water heater according to claim 14, **characterised in that** it further comprises heat exchange means (67) connected between the water collecting means (58) of the first housing (50) and the water discharge means (53) in the first housing (50) which is located above the first packing means (51), the heat exchange means (67) extracting heat from hot water accumulating in the water collecting means (58) for heating purposes, and feed conduit means to feed the heat exchanger (67) and the water discharge means (53), the first water discharge means being connected to the feed conduit means at the outlet of the heat exchanger (67).

17. A water heater according to claim 16, **characterised in that** the second water discharge means (60') is also connected to the outlet of the heat exchanger (67).

18. A water heater according to claim 16, **characterised in that** the second water discharge means (60') is connected to an inlet of the heat exchanger (67) to receive hot water from the water collecting means (58) of the first housing (50).

19. A water heater according to claim 1, **characterised in that** the further packing means (94, 91) is comprised of a second and third packing of heat exchange bodies secured spaced-apart and isolated from one another in a second housing (90), a division wall (87) in the second housing dividing same in a lower chamber (89) and an upper chamber (88), the second housing (90) constituting the further housing means and having air displacement means connected to the lower chamber for convecting air through the third packing (91) secured therein, the further water collecting means (98, 93) comprising a third water collecting reservoir (93) in a bottom portion (89) of the lower chamber and a second water collecting reservoir (98) above the division wall (87) in the upper chamber (88), the second packing (94) being placed above the second water collecting reservoir (98), a flue communicating with the second chamber, the further water discharge means (95, 92) comprising a second and third water discharge means secured in a space above the second and third packing (94, 91), respectively; the feed conduit means being designed to supply water from the third water collecting reservoir (93) to the second discharge means (95), and the air convection means being designed to convect preheated humid air from the space above the third packing (91) to the bumer (83) for admixture with the combustible gas.

20. A water heater according to claim 19, **characterised in that** it further comprises conduit means interconnecting the second water collecting reservoir (98) to the reservoir means of the first housing (80), the reservoir means of the first housing (80) being connected to heat exchanger means (106) through feed conduit means for extracting heat from hot water accumulating in the water collecting means (86) for heating purposes.

21. A water heater according to claim 20, **characterised in that** the heat exchanger means (106) has an inlet connection connected to the reservoir means of the first housing (80) and an outlet connected to the water discharge means (82) of the first housing (80) to supply cold water to the water discharge means (82).

22. A water heater according to claim 21, **characterised in that** the third water discharge means (92) is connected to the outlet of the heat exchanger (106).

23. A water heater according to claim 21, **characterised in that** the third water discharge means (92) is connected to the water reservoir means of the first housing (80).

24. A water heater according to claim 19, **characterised in that** the third water discharge means (92) is connected to the second water collecting reservoir (98) in the upper chamber (88) of the second housing (90).

25. A water heater according to claim 2, **characterised in that** the first housing means (10; 50; 80) and the further housing means (21, 30; 60; 90) are elongated vertical cylindrical housings.

26. A water heater according to claim 1, **characterised in that** the burner (18) is further provided with a pilot (18') to prevent its flame from extinguishing,

27. A water heater according to claim 1, **characterised in that** the combustible gas is natural.
